# EUROPEAN PATENT APPLICATION

(11) **EP 4 390 217 A1**
(43) Date of publication of application: **26.06.2024**
(21) Application number: 22216392.5
(22) Date of filing: 23.12.2022
(51) Int. Cl.: F21S 43/16, F21S 43/239, B60Q 1/00

(54) **AUTOMOTIVE LIGHTING AND/OR SIGNALING DEVICE PROVIDED WITH PHOTOLUMINESCENT DEVICES WITH STEREOSCOPIC EFFECT**

(71) Applicant: Marelli Automotive Lighting Italy S.p.A., 10078 Venaria Reale (TO) (IT)
(72) Inventor: DE MAIO, Giannandrea, I-33028 Tolmezzo, UDINE (IT); MONTI, Desiree, I-33028 Tolmezzo, UDINE (IT); SVETTINI, Marco, I-33028 Tolmezzo, UDINE (IT)
(74) Representative: Mitola, Marco

(57) **Abstract**

A lighting and/or signaling device (4) for vehicles comprising a container body (8) which delimits a containment seat (12), said containment seat (12) housing at least a first light source (16') adapted to emit at least a first input light beam (32') having an input wavelength, at least a first emitting plate (36) and a second emitting plate (40) at least partially made of a photoluminescent material, said photoluminescent material being excitable by said first input light beam (32'), said first and second emitting plates (36, 40) being spaced apart from each other and facing said at least a first light source (16') so as to be hit by said at least a first input light beam (32') and to each emit its own output light beam (44) having a different output wavelength from the input wavelength and not adapted to in turn excite the photoluminescent material, each output light beam (44) extending along a main output direction (Y-Y). The first and second emitting plates (36, 40) are offset with respect to said main output direction (Y-Y). The device further comprises means (48) for delimiting the output light beams (44) emitted by said emitting plates (36, 40), configured to delimit the output light beams (44) along predetermined patterns, wherein said predetermined patterns are coincident with peripheral edges (52) of said emitting plates (36, 40) or contained within said peripheral edges (52).

## Description

### FIELD OF APPLICATION

The present invention relates to an automotive lighting and/or signaling device provided with photoluminescent devices with stereoscopic effect.

### BACKGROUND ART

The term automotive lighting and/or signaling device is used herein in a very broad sense to comprise an either rear or front automotive light, the latter also referred to as a headlight or headlamp.

As is known, an automotive light serves to provide a signal or make the roadbed visible for the driver. In other words, the automotive light is a device intended to provide at least one lighting and/or signaling function of the vehicle. Lighting and/or signaling functions of the vehicle include, for example, position light, turn signal light, brake light, rear fog lamp, reversing light, dipped beam light, high beam light, daytime running light, and further similar lights typical of automotive light assemblies.

There is an increasingly common tendency for the lighting and/or signaling device to serve an aesthetical function too, such as lighting devices which show logos and the like, which can be located both outside and inside the vehicle.

Obviously, the technical lighting and/or signaling function and the aesthetical function can coexist in the same device: for example, the tendency is known to obtain the vehicle signaling by lighting a particular pattern which can, for example, identify the brand of the vehicle on which the lighting and/or signaling device is mounted.

Moreover, vehicle manufacturers are increasingly asked to manufacture lighting and/or signaling devices with stereoscopic effect, i.e., having lighting portions with three-dimensional effects.

The need to obtain three-dimensional lighting patterns however conflicts with the need to manufacture lighting and/or signaling devices with a reduced depth since they should integrate with the bodywork of the vehicle to which they are applied.

The current solutions of the prior art are not capable of meeting such antithetical needs, i.e., it is not possible to keep small the physical volumes of the device as well as the manufacturing and assembly costs of the lighting and/or signaling devices which emit light portions with stereoscopic effect.

### PRESENTATION OF THE INVENTION

It is the object of the present invention to provide a lighting and/or signaling device which overcomes the above-described drawbacks and limitations.

Such a need is met by an automotive lighting and/or signaling device according to claim 1.

Other embodiments of the present invention are described in the dependent claims.

### DESCRIPTION OF THE DRAWINGS

Further features and advantages of the present invention will become more apparent from the following description of preferred and non-limiting embodiments thereof, in which:

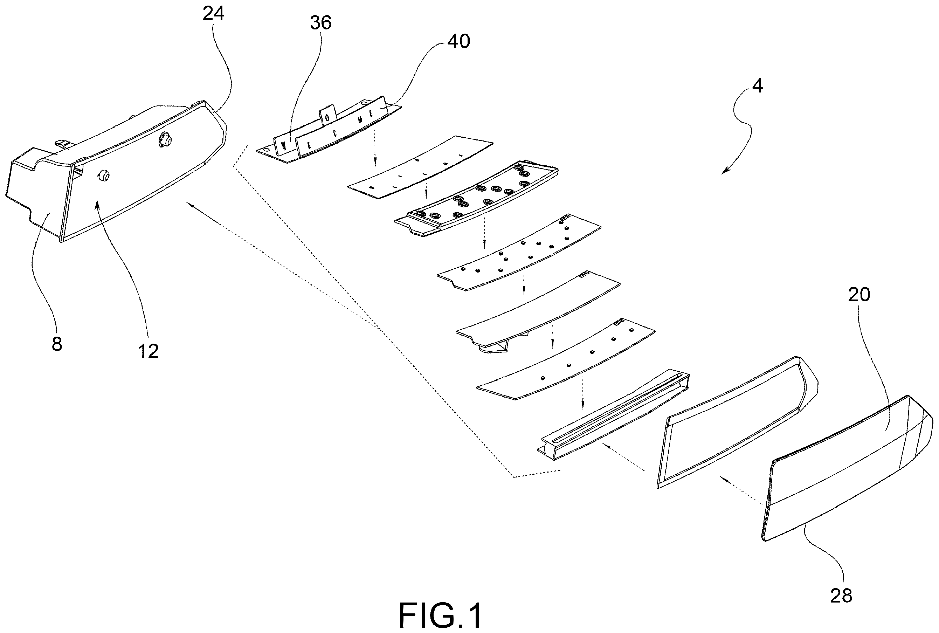

Figure 1 shows a perspective view, with separated parts, of a lighting and/or signaling device according to a possible embodiment of the present invention;

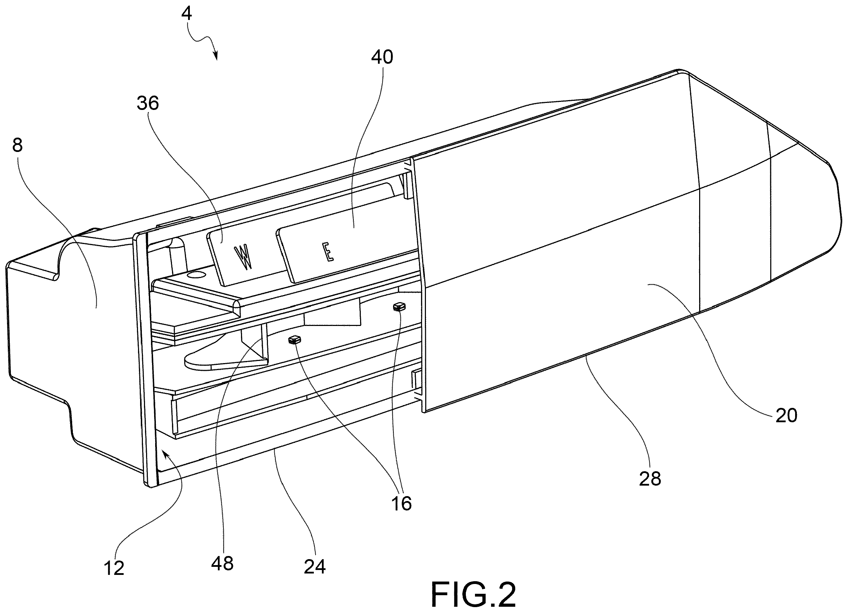

Figure 2 shows a perspective view, in an assembled configuration, of the lighting and/or signaling device in Figure 1, from which a part of the front lens body was omitted;

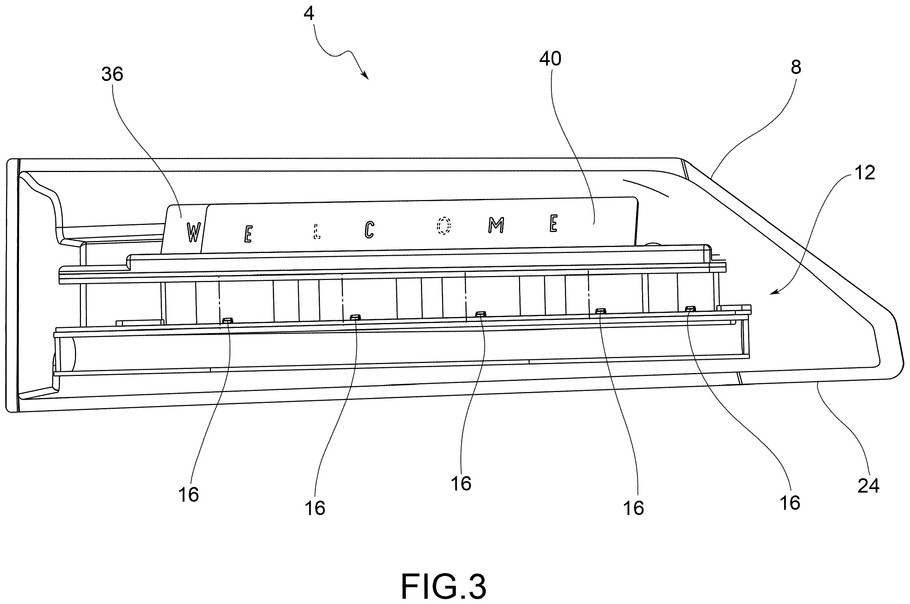

Figure 3 shows a front view of the lighting and/or signaling device in Figure 1, without the front lens body;

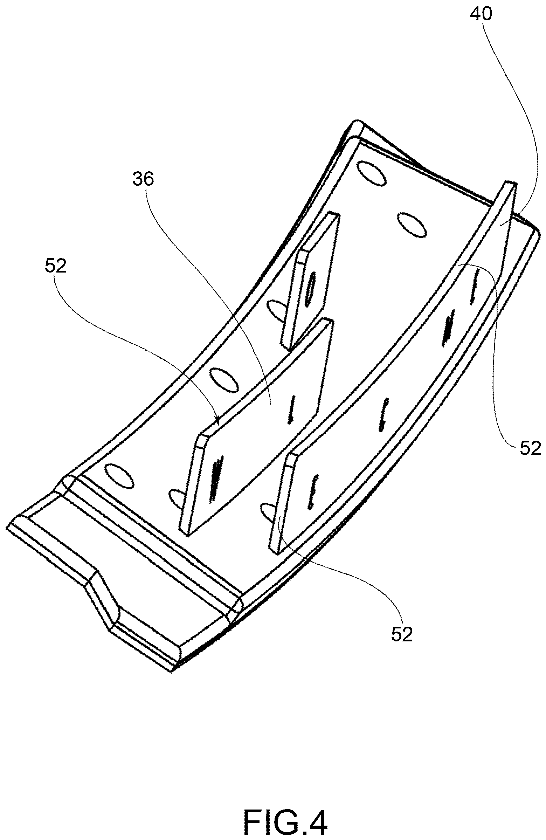

Figure 4 shows a perspective view of certain internal components of the lighting and/or signaling device in Figure 1;

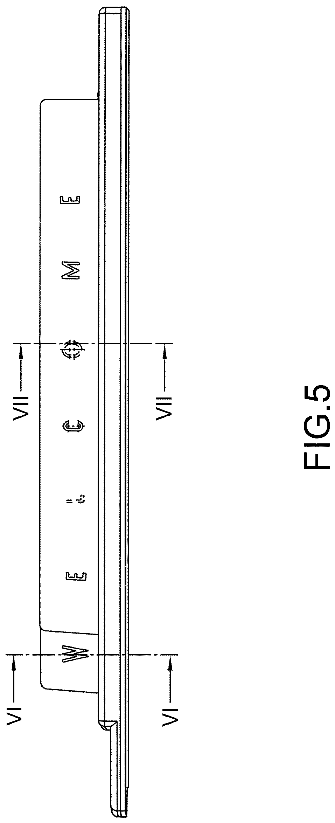

Figure 5 shows a front view of the internal components, shown in Figure 4, of the lighting and/or signaling device in Figure 1;
Figure 6 shows a sectional view of the internal components in Figure 4, along the section plane VI-VI;
Figure 7 shows a sectional view of the internal components in Figure 4, along the section plane VII-VII;
Figures 8-9 show further sectional views of the internal components in Figure 4, according to further possible embodiments of the present invention.

Elements or parts of elements common to the embodiments described below will be indicated by the same reference numerals.

### DETAILED DESCRIPTION

With reference to the aforesaid drawings, reference numeral 4 indicates, as a whole, a lighting and/or signaling device, such as an automotive light, to which the following disclosure will refer without however losing in generality.

As mentioned above, the term "lighting and/or signaling device" can indifferently mean an automotive rear light or an automotive front light, the latter also referred to as a headlight or headlamp, comprising an external light of the vehicle serving a lighting and/or signaling function, such as a position light, for example, which can be a front or rear or side position light, a turn signal light, a brake light, a rear fog lamp, a high beam light, a dipped beam light, and the like.

Thus, as better described below, the device in its signaling function can comprise the possibility of sending light signals, logos, but also words and lit messages of any kind. Hence, it is possible for the device to serve a merely aesthetical function, as in the case of lighting devices showing logos and the like, which can be arranged both outside and inside the vehicle.

The lighting and/or signaling device 4 comprises a container body or hollow housing 8, usually made of a polymer material, such as acrylonitrile butadiene styrene, or ABS, for example, which typically allows fixing the lighting and/or signaling device 4 to the related vehicle or to any type of support.

For the purposes of the present invention, the container body or housing 8 can have any shape, size or position: for example, the container body 8 can also not be directly connected to the bodywork or other external, or even internal, fixings of the associable vehicle.

The container body 8 delimits a containment seat 12 which houses a plurality of components of said lighting and/or signaling device 4, such as reflectors, light guides, etc., for example.

In particular, the containment seat 12 houses at least a first light source 16' adapted to emit at least a first input light beam 32' having an input wavelength. The at least a first light source 16' preferably comprises an LED, mini LED, OLED or laser light source adapted to emit a light beam.

The at least a first light source 16' is configured so that the input wavelength thereof is between 380 µm and 500 µm.

For example, a lens body 20 can be placed to close at least partially the container body 8 so as to close said containment seat 12 which houses the at least a first light source 16'.

For the purposes of the present invention, the lens body 20 is outside the lighting and/or signaling device 4 so as to define at least one outer wall of the lighting and/or signaling device directly subject to the atmosphere, thus integrating with the line of the car, when the container body 8 is firmly recessed in the chassis of the vehicle. It is also possible to provide the lens body 20 integrated with the at least one light source 16'.

According to possible embodiments, the material of the lens body 20 is of the polymer type, i.e., a resin such as PMMA (poly methyl methacrylate), PC (polycarbonate), and the like. Therefore, said material of the lens body 20 is at least partially transparent or semitransparent or translucent, one or more opaque portions being also possibly included.

As seen, the containment seat 12 extends along a first peripheral edge 24 and is closed by the lens body 20 which extends along a second peripheral edge 28 at least partially counter-shaped to and overlapping said first peripheral edge 24.

Moreover, at least a first and a second emitting plate 36, 40 at least partially made of a photoluminescent material are contained in the containment seat 12, said photoluminescent material being excitable by the first input light beam 32' characterized by the input wavelength.

For example, said first and second emitting plates 36, 40 can be made from and/or at least partially covered with said photoluminescent material.

The photoluminescent material can be a fluorescent or phosphorescent material.

Said first and second emitting plates 36, 40 are spaced apart from each other and face said at least a first light source 16' so as to be hit by said at least a first input light beam 32' and to each emit an output light beam 44 having a different output wavelength from the input wavelength and being unsuitable for exciting the photoluminescent material. In other words, the photoluminescent material applied in the emitting plates 36, 40 can only be excited by the input light beam 32' emitted by the first light source 16', while it remains inactive if affected by a different wavelength from the input one.

Each output light beam 44 emitted by a respective emitting plate extends along a main output direction Y-Y.

Advantageously, the first and second emitting plates 36, 40 are offset with respect to said main output direction Y-Y: thereby, the stereoscopic effect is created in an external observer observing the lighting and/or signaling device from the side of the lens body 20.

Advantageously, the lighting and/or signaling device 4 comprises means 48 for delimiting the output light beams 44 emitted by said emitting plates 36, 40, configured to delimit the output light beams 44 along predetermined patterns.

Said predetermined patterns can be coincident with peripheral edges 52 of said emitting plates 36, 40 or can be contained within said peripheral edges 52.

According to a possible embodiment, said means 48 for delimiting the output light beams 44 emitted by said emitting plates 36, 40 comprise the shaping of the emitting plates 36, 40 which exactly replicates said predetermined patterns. In other words, the peripheral edges 52 of the emitting plates 36, 40 can be shaped so as to exactly replicate the predetermined patterns. Thereby, the output light beams 44, obtained by exciting the photoluminescent material of the emitting plates 36, 40 hit by the input light beams 32, will exactly replicate the shape of the predetermined patterns. Therefore, in this embodiment, the emitting plates 36, 40 forming the only portions of photoluminescent material adapted to emit the output light beams, are shaped. Therefore, the geometry of the input light beam 32 is not modified.

According to a possible embodiment, said means 48 for delimiting the output light beams 44 emitted by said emitting plates 36, 40 comprise a mask 56 or a collimator 60 arranged between the light source 16', 16'' and the corresponding emitting plate 36, 40 so as to delimit the input light beam 32 so that it is incident on the emitting plate 36, 40 at said predetermined pattern. Mask 56 is opaque to the input light beams 32. Therefore, in this embodiment, the input light beam emitted by the light sources 16', 16'' is shaped.

According to a further possible embodiment, said means 48 for delimiting the output light beams 44 emitted by said emitting plates 36, 40 comprise a mask 56 which replicates said predetermined pattern, said mask 56 being arranged on the emitting plates 36, 40. Mask 56 is opaque to the input light beams 32. In this embodiment, a portion of emitting plates 36, 40 made of a photoluminescent material is shielded so that the output light beam follows the predetermined pattern.

It is worth noting that the embodiments of the delimiting means 48 described above are not alternative to one another, rather they can coexist within the same lighting and/or signaling device 4.

According to a possible embodiment, said first and second emitting plates 36, 40 are associated with the same first support 64 arranged facing the at least a first light source 16'.

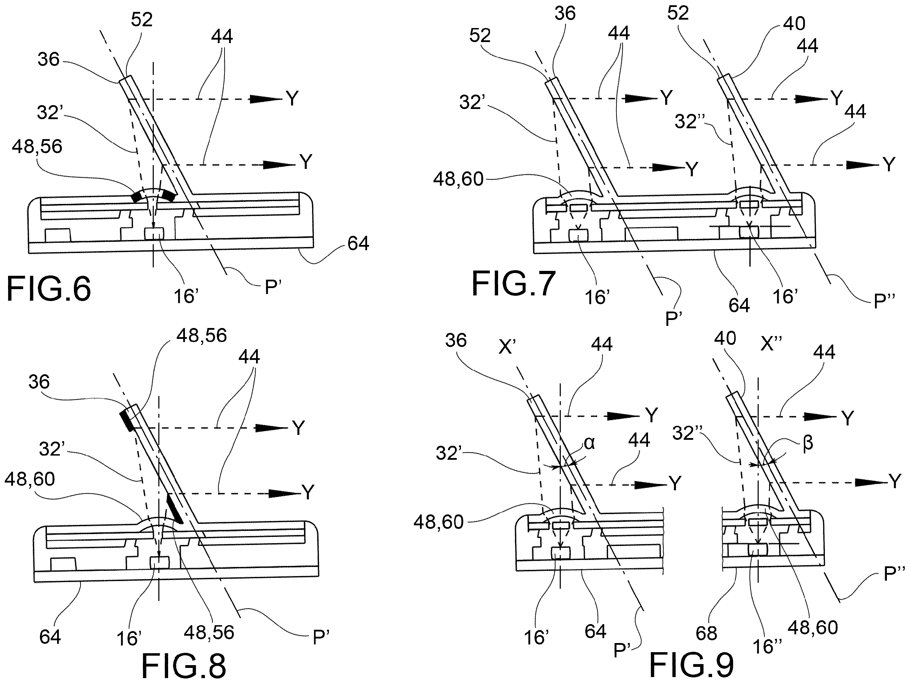

According to a possible embodiment (Figure 7), the lighting and/or signaling device 4 comprises a first light source 16' and a second light source 16'' which emit a first input light beam 32' and a second input light beam 32", respectively, having an input wavelength. The first light source 16' directly faces the first emitting plate 36 so that the first input light beam 32' at least partially hits the first emitting plate 36. The second light source 16' directly faces the second emitting plate 40 so that the second input light beam 32'' at least partially hits the second emitting plate 40.

Preferably, the first light source 16' and the second light source 16'' are positioned in the container body 8 so that the respective first and second input light beams 32', 32'' are not visible through the lens body 20, along said main output direction Y-Y of the output light beams 44.

For example, the first input light beam 32' is shaped to exclusively hit the first emitting plate 36 and not hit the second emitting plate 40, while the second input light beam 32'' is shaped so as to exclusively hit the second emitting plate 40 and not hit the first emitting plate 36.

For example, said first and second emitting plates 36, 40 are associated with mutually independent and separate first support 64 and second support 68, respectively.

Preferably, said first and second emitting plates 36, 40 at least partially lie on mutually distinct lying planes P', P".

Said lying planes P', P'' can be parallel or even incident to each other.

Said first and second emitting plates 36, 40 can be made from and/or at least partially covered with said photoluminescent material.

According to a possible embodiment, said first and second emitting plates 36, 40 are at least partially aligned with each other so that the first output light beam 44 of the first emitting plate 36 at least partially hits the second emitting plate 40.

The emitting plates 36, 40 can have various orientations and shapes.

According to a possible embodiment, the first input light beam 32' propagates along a first main propagation axis X'-X' and the first emitting plate 36 is oriented so that said first main propagation axis X'-X' is incident on the first emitting plate 36 with a first acute angle α.

According to a possible embodiment, the second input light beam 32'' propagates along a second main propagation axis X''-X'' and the second emitting plate 40 is oriented so that said second main propagation axis X"-X" is incident on the second emitting plate 40 with a second acute angle β.

According to a possible variant, said first and/or second emitting plates 36, 40 are operatively connected to motor means so as to vary the inclination and/or distance thereof with respect to the respective first and second light sources 16', 16''.

Preferably, said first and second emitting plates 36, 40 are made of materials which are transparent to the input light beams 32', 32'' incident thereon. Thereby, the emitting plates 36, 40 do not act as shields, even partial shields, against possible output light beams 44 incident thereon and having, as seen, an output wavelength which is not capable of exciting them.

The operation of a lighting and/or signaling device according to the present invention will now be described.

In particular, when activated, the light sources 16', 16'' emit respective input light beams 32', 32'' having an input wavelength such as to excite the respective photoluminescent material of the emitting plates 36, 40.

In particular, the emitting plates 36, 40 are excited by said input light beams emitted by two light sources 16', 16" or a single light beam emitted by the same light source 16, and in turn emit output light beams 44.

The input light beams 32', 32'' are capable of reaching the lighting plates 36, 40 also crossing them, since said lighting plates and/or the respective supports are transparent to the input and output light beams.
As shown, the means 48 for delimiting the output light beams 44 emitted by said emitting plates 36, 40 are configured to delimit the output light beams 44 along predetermined patterns as a function of the manufacturer's requirements. Said predetermined patterns, which can serve both a signaling function and a mere aesthetical function, can be coincident with the peripheral edges 24, 28 of the emitting plates 36, 40 or can be contained within said peripheral edges 24, 28.

As described above, the delimiting means 48 can be of various type.

For example, they can comprise the shaping of the emitting plates 36, 40 which exactly replicates said predetermined patterns. Obviously, the emitting plates 36, 40 are the only portions configured to emit the output light beams 44 whereby the suitable shaping thereof ensures the lighting of the predetermined patterns. Thereby, the emitting plates 36, 40 forming the only portions of photoluminescent material adapted to emit the output light beams 44 are shaped, and therefore no change is made to the distribution of the input light beam 32.

Moreover, said delimiting means 48 can comprise a mask 56 or a collimator 60 arranged between the light source 16', 16'' and the corresponding emitting plate 36, 40 so as to delimit the input light beam 32 so that it is incident on the emitting plate 36, 40 at said predetermined pattern. Mask 56 is opaque to the input light beams 32. Thereby, the input light beam emitted by the light sources 16', 16'' that excites the emitting plates 36, 40 exclusively along the predetermined patterns is shaped upstream.

**Moreover,** said means 48 for delimiting the output light beams 44 emitted by said emitting plates 36, 40 can comprise a mask 56 which replicates said predetermined pattern and which is however applied directly downstream, i.e., to the emitting plates 36, 40. Mask 56 is opaque to the input light beams 32. In this embodiment, a portion of emitting plates 36, 40 made of a photoluminescent material is shielded so that the output light beam follows the predetermined pattern.

Irrespective of the type of delimiting means 48 employed, given that the emitting plates 36, 40 are offset along the main output direction Y-Y, the external observer sees the output light beams 44, coming from the separate emitting plates 36, 40 with stereoscopic effect, proportional to said offsetting.

As can be appreciated from the above description, the present invention allows overcoming the drawbacks of the background art.

In particular, by virtue of the present invention, a lighting and/or signaling device which serves both the technical lighting and/or signaling function and the aesthetical function, with particular reference to three-dimensional or stereoscopic lighting effects, can be provided.

Moreover, the signaling and/or lighting device according to the present invention is affordable to manufacture and assemble.

Moreover, the signaling and/or lighting device according to the present invention has a compact size in terms of depth, despite the three-dimensional lighting effects it allows to obtain.

Thus, the signaling and/or lighting device according to the present invention can be easily integrated with bodywork components or panels of a vehicle since it is very thin.

Those skilled in the art, with the purpose of meeting contingent and specific needs, may make several changes and variations to the lighting and/or signaling devices described above.

The scope of protection of the present invention is defined by the following claims.

## Claims

1. A lighting and/or signaling device (4) for vehicles, comprising:
- a container body (8) which delimits a containment seat (12),
- said containment seat (12) housing at least a first light source (16') adapted to emit at least a first input light beam (32') having an input wavelength,
- at least a first emitting plate (36) and a second emitting plate (40) at least partially made of a photoluminescent material, said photoluminescent material being excitable by said first input light beam (32'), said first and second emitting plates (36, 40) being spaced apart from each other and facing said at least a first light source (16') so as to be hit by said at least a first input light beam (32') and to each emit its own output light beam (44) having a different output wavelength from the input wavelength and not adapted to in turn excite the photoluminescent material, each output light beam (44) extending along a main output direction (Y-Y),
- the first and second emitting plates (36, 40) being offset with respect to said main output direction (Y-Y),
- means (48) for delimiting the output light beams (44) emitted by said emitting plates (36, 40), configured to delimit the output light beams (44) along predetermined patterns, wherein said predetermined patterns are coincident with peripheral edges (52) of said emitting plates (36, 40) or contained within said peripheral edges (52).

2. A lighting and/or signaling device (4) according to claim 1, wherein said means (48) for delimiting the output light beams (44) emitted by said emitting plates (36, 40) comprise the peripheral shaping of the emitting plates (36, 40) which exactly replicates said predetermined patterns.

3. A lighting and/or signaling device (4) according to claim 1 or 2, wherein said means (48) for delimiting the output light beams (44) emitted by said emitting plates (36, 40) comprise a mask (56) and/or a collimator (60) arranged between the light source (16) and the corresponding emitting plate (36, 40) so as to delimit the input light beam (32) so that it is incident on the emitting plate (36, 40) at said predetermined pattern.

4. A lighting and/or signaling device (4) according to claim 1, 2 or 3, wherein said means (48) for delimiting the output light beams (44) emitted by said emitting plates (36, 40) comprise a mask (56) which replicates said predetermined pattern, said mask (56) being arranged on the emitting plates (36, 40).

5. A lighting and/or signaling device (4) according to any one of claims 1 to 4, comprising:
- a first light source (16') and a second light source (16") which emit a first input light beam (32') and a second input light beam (32''), respectively, having an input wavelength,
- wherein the first light source (16') directly faces the first emitting plate (36) so that the first input light beam (32') at least partially hits the first emitting plate (36),
- wherein the second light source (16'') directly faces the second emitting plate (40) so that the second input light beam (32'') at least partially hits the second emitting plate (40).

6. A lighting and/or signaling device (4) according to claim 5, wherein the first input light beam (32') is shaped to exclusively hit the first emitting plate (36) and not hit the second emitting plate (40), and wherein the second input light beam (32'') is shaped so as to exclusively hit the second emitting plate (40) and not hit the first emitting plate (36).

7. A lighting and/or signaling device (4) according to any one of claims 1 to 6, in which said first emitting plate (36) and second emitting plate (40) at least partially lie on mutually distinct lying planes (P', P").

8. A lighting and/or signaling device (4) according to claim 7, wherein said lying planes (P', P") are parallel to each other.

9. A lighting and/or signaling device (4) according to claim 7, wherein said lying planes (P', P") are incident to each other.

10. A lighting and/or signaling device (4) according to any one of claims 1 to 9, in which said first emitting plate (36) and second emitting plate (40) are at least partially concave or convex.

11. A lighting and/or signaling device (4) according to any one of claims 1 to 5 and 7 to 10, wherein said first emitting plate (36) and second emitting plate (40) are at least partially aligned with each other so that the first output light beam (44) of the first emitting plate (36) at least partially hits the second emitting plate (40).

12. A lighting and/or signaling device (4) according to any one of claims 1 to 11, wherein said first emitting plate (36) and second emitting plate (40) are made of materials which are transparent to the light beams incident thereon, emitted by respective light sources (16) .

13. A lighting and/or signaling device (4) according to any one of claims 1 to 12, wherein the first input light beam (32') propagates along a first main propagation axis (X'-X') and the first emitting plate (36) is oriented so that said first main propagation axis (X'-X') is incident on the first emitting plate (36) with a first acute angle (α).

14. A lighting and/or signaling device (4) according to any one of claims 1 to 13, wherein the second input light beam (32'') propagates along a second main propagation axis (X''-X'') and the second emitting plate (40) is oriented so that said second main propagation axis (X"'-X' ') is incident on the second emitting plate (40) with a second acute angle β.

15. A lighting and/or signaling device (4) according to any one of claims 1 to 14, wherein said first emitting plate (36) and/or second emitting plate (40) are operatively connected to motor means so as to vary the inclination and/or distance thereof with respect to the respective first light source (16') and second light source (16'').

16. A lighting and/or signaling device (4) according to any one of claims 1 to 15, wherein said light sources (16) are LED, mini LED, OLED or laser light sources.

17. A lighting and/or signaling device (4) according to any one of claims 1 to 16, wherein the light sources (16) are configured so that the input wavelength is between 380 µm and 500 µm.

18. A lighting and/or signaling device (4) according to any one of claims 1 to 17, wherein said first and second emitting plates are at least partially made from and/or covered with photoluminescent material, and wherein said photoluminescent material is a fluorescent or phosphorescent material.
